# EUROPÄISCHE PATENTSCHRIFT

(11) **EP 3 756 339 B1**
(45) Veröffentlichungstag und Bekanntmachung des Hinweises auf die Patenterteilung: **25.12.2024**
(21) Anmeldenummer: 19706985.9
(22) Anmeldetag: 21.02.2019
(51) Int. Cl.: H04N 23/68, H04N 23/698, H04N 23/90

(54) **ERZEUGUNG VON PANORAMABILDERN**
GENERATION OF PANORAMIC IMAGES
PRODUCTION D'IMAGES PANORAMIQUES

(30) Priorität: 22.02.2018 DE 102018202707
(43) Veröffentlichungstag der Anmeldung: 30.12.2020
(73) Patentinhaber: Fraunhofer-Gesellschaft zur Förderung der angewandten Forschung e.V., 80686 München (DE)
(72) Erfinder: OBERDÖRSTER, Alexander, 07745 Jena (DE); BRÜCKNER, Andreas, 01277 Dresden (DE); DUPARRÉ, Jacques, 07745 Jena (DE); WIPPERMANN, Frank, 07745 Jena (DE)
(74) Vertreter: Zinkler, Franz
(86) Internationale Anmeldenummer: PCT/EP2019/054373
(87) Internationale Veröffentlichungsnummer: WO 2019/162411

(56) Entgegenhaltungen:
- EP-A2- 2 680 586
- EP-A2- 2 680 586
- EP-A2- 2 680 586
- WO-A1-2015/104235
- WO-A1-2015/104235
- DE-A1- 102015 215 844
- DE-A1- 102015 215 844
- DE-A1- 102015 215 844
- US-A1- 2017 078 653
- US-A1- 2017 078 653
- US-B1- 9 838 687
- US-B1- 9 838 687
- US-B1- 9 838 687
- JUN SHIMAMURA ET AL: "Construction and presentation of a virtual environment using panoramic stereo images of a real scene and computer graphics models", PROCEEDINGS / 15TH INTERNATIONAL CONFERENCE ON PATTERN RECOGNITION : BARCELONA, SPAIN, SEPTEMBER 3 - 7, 2000; [PROCEEDINGS OF THE INTERNATIONAL CONFERENCE ON PATTERN RECOGNITION. (ICPR)], IEEE COMPUTER SOCIETY, LOS ALAMITOS, CALIF. [U.A.], vol. 4, 3 September 2000 (2000-09-03), pages 463 - 467, XP010533119, ISBN: 978-0-7695-0750-7
- JUN SHIMAMURA ET AL: "Construction and presentation of a virtual environment using panoramic stereo images of a real scene and computer graphics models", PROCEEDINGS / 15TH INTERNATIONAL CONFERENCE ON PATTERN RECOGNITION : BARCELONA, SPAIN, SEPTEMBER 3 - 7, 2000; [PROCEEDINGS OF THE INTERNATIONAL CONFERENCE ON PATTERN RECOGNITION. (ICPR)], IEEE COMPUTER SOCIETY, LOS ALAMITOS, CALIF. [U.A.], vol. 4, 3 September 2000 (2000-09-03), pages 463 - 467, XP010533119, ISBN: 978-0-7695-0750-7

## Beschreibung

Die vorliegende Erfindung bezieht sich auf das Erzeugen von Panoramabildern, insbesondere auf das Erzeugen von Panoramabildern mit verringerten Artefakten.

In Panoramabildern wird ein großer Beobachtungswinkel abgedeckt, der nicht notwendigerweise ein Blickfeld von 360° umfasst. Panoramabilder werden meist erzeugt, indem mehrere Bilder, die mit unterschiedlichen Blickrichtungen aufgenommen wurden, zusammengefügt werden.

Bei einer Variante der Erzeugung eines Panoramabildes werden mehrere Einzelbilder nacheinander erzeugt. Zwischen den Einzelbildern wird die Kamera ein Stück weitergeschwenkt. Die Einzel- oder Teilbilder werden dann mit einer sogenannten Stitching-Technik zu einem Panoramabild zusammengesetzt. Bei dem Stitching-Prozess kann es zu Fehlern kommen. Fehler, die dadurch bedingt sind, dass die Eintrittspupille nicht mit der Drehachse der Kamera zusammenfällt, können konstruktiv gering gehalten werden. Nicht ohne weiteres beseitigbare Probleme sind allerdings solche, die aufgrund der Bewegung von Objekten in der aufgenommen Szene entstehen.

Die Kombination von einzelnen Aufnahmen zu einem Gesamtbild kann gemäß einer weiteren Variante nicht auf Basis von im Zeitmultiplex aufgenommenen Bildern durchgeführt werden, sondern von solchen, die im Kanalmultiplex aufgenommen werden. Hier werden die Einzelaufnahmen gleichzeitig durch mehrere Kanäle mit unterschiedlichen Blickrichtungen aufgenommen und dann zusammengefügt. Hier treten aufgrund der Nebeneinanderanordnung der Kanäle Parallaxprobleme beim Stitchen auf. In beiden Fällen gibt es also Probleme beim Stitchen aufgrund von Inkonsistenzen zwischen den Teilaufnahmen, einmal aufgrund der unterschiedlichen Aufnahmezeitpunkte und das andere Mal aufgrund des Abstands zwischen den optischen Kanälen.

US 9,838,687 zeigt einen Panorama-Kamera-Aufbau mit vier Kameras mit sich gegenseitig überlappenden Gesichtsfeldern. Die Kameras senden ihre Videosignale an einen Server über ein Netzwerk. Der Server decodiert die Frames, die von den Kameras erhalten werden, und stitcht sie zu Panoramabildern zusammen. Der Server weist ein Modul auf, das ein vorgeschlagenes Gesichtsfeld in dem Panoramavideo bildet und ausgebildet ist, Videosignale an Client-Vorrichtungen zu senden.

Die Aufgabe der vorliegenden Erfindung besteht darin, Panoramabilder zu erzeugen, die eine verbesserte Qualität aufweisen, wie z.B. aufgrund einer verringerten Inkonsistenz zwischen den einzelnen Teilaufnahmen.

Diese Aufgabe wird durch den Gegenstand der unabhängigen Patentansprüche gelöst. Ausgestaltungen werden in den abhängigen Patentansprüchen definiert.

Der vorliegenden Anmeldung liegt die Idee zugrunde, dass zwei Arten von Einzelbildern aufgenommen werden, die zu einem Satz von zeitgleich aufgenommenen Einzelbildern - einem ersten Satz von Einzelbildern - und einem weiteren Satz von zeitlich nacheinander aufgenommenen Einzelbildern - einem zweiten Satz von Einzelbildern - führen. Dazu werden zeitgleichen Aufnahmen - ersten Aufnahmen - mittels mehrerer optischer Kanäle eines Kamerasystems erzeugt, zeitlich versetzt - zu den ersten Einzelbildern und/oder untereinander - zumindest ein weiteres Einzelbild - zweite(s) Einzelbild(er) genannt - die mit einem oder mehreren dieser Kanäle erzeugt werden, hinzugefügt. Der Satz zeitversetzt zueinander aufgenommener Aufnahmen kann demnach von dem gleichen "Standort" aus gemacht werden bzw. mit geringem Basisabstand, so dass diese keine oder eine nur verschwindende Parallaxe aufweisen. Der andere Satz von gleichzeitig erzeugten Aufnahmen leidet nicht an Bewegungsinkonsistenzen zwischen den Aufnahmen. Aus diesen beiden Sätzen von Einzelbildern kann aufgrund ihrer komplementären Vorteile eine verbesserte Zusammenfügung zu einem Panoramabild, d.h. eine Konstruktion eines verbesserten Panoramabildes, erzielt werden. In Kombination kann sich ein Panoramabild ergeben, das artefaktfreier ist als mit lediglich einem Satz von Aufnahmen, und zwar unabhängig von der Art der Gesamtszene, nämlich einer Szene im Gesamtblickfeld mit Bewegung oder ohne. Der konstruktive Zusatzaufwand kann je nach bereits vorhandener Konstruktion des Kamerasystems sehr gering oder sogar gar nicht vorhanden sein.

Die Vorrichtung bestimmt einen ersten Unterschied zwischen einem ersten Paar von ersten Einzelbildern, die zumindest einen Abschnitt des Panoramablickfeldes betreffen und im Panoramablickfeld einander in einem ersten Überlappungsbereich überlappen, in dem ersten Überlappungsbereich, und bestimmt einen zweiten Unterschied zwischen einem zweiten Paar von Einzelbildern aus dem zweiten Satz von Einzelbildern, die den gleichen Abschnitt des Panoramablickfeldes betreffen und im Panoramablickfeld einander in einem zweiten Überlappungsbereich überlappen, in dem zweiten Überlappungsbereich, wobei das erste Paar für das Konstruieren des Panoramabildes ausgewählt wird, wenn der erste Unterschied kleiner als der zweite Unterschied ist, und das zweite Paar ausgewählt wird für das Konstruieren des Panoramabildes in dem Abschnitt, wenn der erste Unterschied größer als der zweite Unterschied ist. Der erste und zweite Überlappungsbereich können sich decken.

In einer Ausführungsform ist die Vorrichtung eingerichtet, um die Bestimmung des ersten und zweiten Unterschieds und die darauf basierende Auswahl des ersten oder zweiten Paars entlang einer zu einer ersten Richtung, entlang der die von dem Paaren von Einzelbildern abgedeckten Gesichtsfelder nebeneinander liegen, senkrechten zweiten Richtung so durchzuführen, dass die Bestimmung in Querschnitte/Streifen unterteilt ist, so dass die Auswahl für unterschiedliche Querschnitte, die quer zur zweiten Richtung verlaufen, unterschiedlich ausfallen kann.

In einer Ausführungsform wird das Aufnehmen des zumindest einen zweiten Einzelbildes so durchgeführt, dass die Einzelbilder des zweiten Satzes von Einzelbildern mit unterschiedlicher Blickrichtung aufgenommen werden, und zwischen den Einzelbildern des zweiten Satzes von Einzelbildern eine Blickrichtungsvariation durchgeführt wird, die durch Rotieren eines optischen Kanals des oder durch Rotieren des gesamten Kamerasystems und/oder Schalten eines schaltbaren optischen Elements, das ein Umlenken eines Strahlenganges des einen optischen Kanals oder eines Strahlenganges der mehreren Kanäle des Kamerasystems bewirkt, und/oder Rotieren eines Spiegels oder Prismas zum Umlenken eines Strahlenganges des einen der mehreren optischen Kanäle oder eines Strahlenganges der mehreren Kanäle des Kamerasystems hervorgerufen wird.

In einer weiteren Ausführungsform umfasst das System ein zweites Kamerasystem und ist ausgebildet für ein zeitgleiches Aufnehmen eines dritten Satzes von Einzelbildern, die zusammen das Panoramablickfeld abdecken, mit mehreren optischen Kanälen des zweiten Kamerasystems, wobei das zweite Kamerasystem relativ zum ersten Kamerasystem versetzt angeordnet ist, für ein Aufnehmen von zumindest einem vierten Einzelbild, mit einem der mehreren optischen Kanälen des zweiten Kamerasystems, so dass das zumindest eine vierte Einzelbild zusammen (d.h. das zumindest eine vierte Einzelbild für sich genommen) oder zusammen mit einem durch den einen der mehreren optischen Kanäle aufgenommenen dritten Einzelbild einen vierten Satz von Einzelbildern ergibt bzw. ergeben, die zeitversetzt zueinander aufgenommen sind und ebenfalls das Panoramablickfeld abdecken, und für ein Konstruieren eines weiteren Panoramabildes oder einer Tiefenkarte für das Panoramabild auf Basis des dritten Satzes von dritten Einzelbildern und des zumindest einen vierten Einzelbildes.

Ausführungsbeispiele der vorliegenden Erfindung werden nachfolgend unter Bezugnahme auf die Figuren näher erläutert, unter denen:
- Fig. 1: eine schematische Darstellung einer Vorrichtung zur Erzeugung von Panoramabildern gemäß einem Ausführungsbeispiel zeigt;
- Fig. 2: eine schematische Darstellung eines Kamerasystems gemäß einem Ausführungsbeispiel zeigt;
- Fig. 3: eine schematische Darstellung eines Kamerasystems gemäß einem Ausführungsbeispiel zeigt, bei dem sich das zu fotografierende Objekt bewegt;
- Fig. 4: ist eine schematische Darstellung von einander überlappenden Einzelbildpaaren betreffend einen gemeinsamen Überlappbereich zur Analyse derselben hinsichtlich des zur Panoramabilderzeugung zu bevorzugenden Paares; und
- Fig. 5: eine schematische Darstellung von einander überlappenden Einzelbildpaaren betreffend einen gemeinsamen Überlappbereich zur Analyse derselben hinsichtlich des zur Panoramabilderzeugung zu bevorzugenden Paares, wobei die Analyse abschnittsweise verfeinert wird.

Bevor anhand der Figuren Ausführungsbeispiele beschrieben werden, sei noch einmal kurz veranschaulicht und motiviert, wodurch sich Vorteile aus den nachfolgend beschriebenen Ausführungsbeispiele ergeben.

Wie in der Beschreibungseinleitung erwähnt, kann es aus verschiedenen Gründen sinnvoll sein, mehrere Aufnahmen mit vergleichsweise kleinem Gesichtsfeld zu einer Aufnahme mit größerem Gesichtsfeld zusammenzufügen. Beispielsweise kann die Gesamtauflösung des Bildes höher sein oder die Abmessungen des Kamerasystems sind geringer oder der Formfaktor des Systems kann günstiger sein, oder es kann besonders flach aufgebaut werden.

Zur Aufnahme der Einzelbilder stehen im Wesentlichen zwei Verfahren zur Verfügung:
1. Zeitversetzte Aufnahme der Einzelbilder mit einem einzelnen optischen Kanal. Hierzu wird die Blickrichtung zwischen den Aufnahmen geändert, etwa durch Drehen der Gesamtkamera oder durch Ablenkung des Strahlenganges mit einem beweglichen Spiegel. Alle Aufnahmen entstehen von einem gemeinsamen Standpunkt aus.
2. Zeitgleiche Aufnahme der Einzelbilder mit mehreren optischen Kanälen, die verschiedene feste Blickrichtungen aufweisen. Zwangsläufig befinden sich in diesem Fall die optischen Kanäle nicht an dem gleichen Ort, sondern sind lateral gegeneinander versetzt. Ein Strahlteiler würde mehrere optische Kanäle mit einem gemeinsamen Nodalpunkt ermöglichen, kann jedoch zu einem unerwünschten Lichtverlust führen.

Bei dem ersten Verfahren unterscheiden sich die Einzelbilder durch ihren Aufnahmezeitpunkt, bei dem zweiten Verfahren durch den Kamerastandort. Dies kann zu Komplikationen beim Zusammenfügen der Einzelbilder zu dem Panoramabild führen. Ein artefaktfreies Zusammenfügen ist nur für Szenen mit folgenden Eigenschaften möglich:
1. Statische Szenen, d.h. es gibt keine Bewegung von den Objekten in der Szene zwischen den Aufnahmezeitpunkten.
2. Alle Objekte der Szene befinden sich in der gleichen Entfernung zum Kamerasystem oder in einer Entfernung, die groß gegenüber dem Versatz der optischen Kanäle ist, je nach Winkelauflösung des Kamerasystems um den Faktor 100 oder mehr.

Die Rekonstruktion von anderen Szenen kann ebenfalls versucht werden, erfordert jedoch einen erhöhten algorithmischen Aufwand. Schlägt die Rekonstruktion fehl, äußert sich dies in Geisterbildern oder in nicht zusammenpassenden Kanten und Bilddetails.

Artefakte können beispielsweise reduziert werden durch eine schnelle Umschaltung der Blickrichtung oder einen geringen Abstand der optischen Kanäle.

Die nachfolgend beschriebenen Ausführungsbeispiele machen sich die Einzelvorteile bzw. Szenen-spezifischen Eignungen der beiden Varianten zu nutze, indem zwei Sätze von Einzelbildern aufgenommen werden, einmal ein zeitgleich aufgenommener, und einmal ein zeitversetzt aufgenommener, so dass die Konstruktion des Panorambildes basierend auf den beiden Sätzen insgesamt verbessert werden kann, unabhängig von der Art der Szene, d.h. mit Bewegung und/oder mit starken Tiefvariationen in den Einzelbildüberlappbereichen.

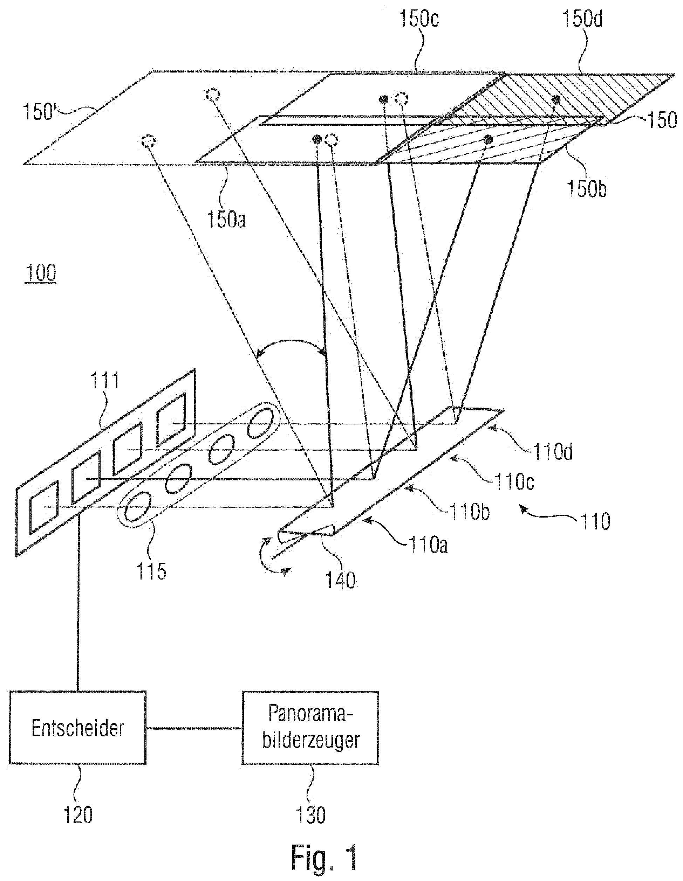

Fig. 1 zeigt eine schematische Darstellung eines Ausführungsbeispiels einer Vorrichtung 100 zur Erzeugung eines Panoramabildes. Die Vorrichtung 100 umfasst eine Anordnung von mehreren optischen Kanälen 110a-110d eines Kamerasystems 110. In dem vorliegenden Beispiel umfasst das Kamerasystem vier optische Kanäle, jedoch ist die vorliegende Erfindung nicht auf vier optische Kanäle beschränkt, sondern kann zwei oder mehr aufweisen. Das Kamerasystem 110 kann pro Kanal 110a-110c ein oder mehrere Linsen oder ein oder mehrere andere optische Elemente 115 umfassen, die zur Abbildung eines jeweiligen, dem jeweiligen Kanal zugehörigen Teilbereiches oder Teilgesichtsfeldes 150a-150d aus einem gesamten Panoramablickfeld 150 auf einen jeweiligen Bildsensor oder jeweiligen Bildsensorabschnitt eines Bildsensors 111 dienen. Die Kanäle können im wesentlichen zueinander parallel von Bildsensor 111 zu einer Umlenkeinrichtung, wie z.B. einem Spiegel, verlaufen, der die Strahlengänge der Kanäle bzw. ihre Blickfelder umlenkt. Er ist schwenkbar zwischen einer ersten, in Fig. 1 gezeigten Stellung, in der das Gesamtgesichtsfeld 150 ist, und einer zweiten Stellung, in der das Gesamtgesichtsfeld 150` ist, das gegenüber dem 150 in der ersten Stellung so verschoben ist, dass die Teilgesichtsfelder 150d, 150b der Kanäle 110d,b in der zweiten Stellung 150' im Wesentlichen mit den Teilgesichtsfeldern 150c,a der Kanäle 110c,a in der ersten Stellung überlappen. Hierzu sind die Teilgesichtsfelder 150a-d in jeder Stellung hier exemplarisch in einem 2x2-Array einander überlappend angeordnet, um das Gesamtgesichtsfeld abzudecken, so dass die Gesamtgesichtsfelder 150,150' in den beiden Stellungen um ein Teilgesichtsfeld voneinander in einer Richtung parallel zu den Strahlengängen vor der Umlenkeinrichtung 140 und senkrecht zur Schwenkachse der Umlenkeinrichtung 140 versetzt sind. Die Kanäle 110d, 110b sind somit in der Lage, dass gesamte Gesichtsfeld aus der ersten Stellung 150 abzudecken, wenn man die Sequenz von Stellungen 150 und 150' betrachtet. Die Aufteilung in eine 2x2-Abdeckung und die Anzahl von Teilgesichtsfeldern ist nicht kritisch und auch die Anzahl an Stellungen könnte erhöht werden. Die Stellungen spielen noch bei der Aufnahme eines Panoramabildes eins Rolle, wie es im Folgenden beschrieben wird.

Das Kamerasystem 110 bzw. dessen Bildsensor(en) 111 ist/sind mit einer Entscheidungsvorrichtung 120 verbunden, die aus einer Menge von Einzelbildern, die nach einem bestimmten, später noch näher beschriebenen Vorgehen aufgenommen werden, einen Satz von Einzelbildern auswählt, um dann zu einem Panoramabild zusammengesetzt zu werden, wobei die Auswahl das Satzes von Bildern auch variieren kann, wie z.B. in einer Richtung quer zum gegenseitigen Teilgesichtsfeldversatz, wie es im Folgenden noch beschrieben wird. Das Zusammensetzen/Konstruieren des Panoramabildes anhand der Aufnahmenauswahl wird von dem Panoramabilderzeuger 130 vorgenommen. Des Weiteren kann die Vorrichtung in manchen Ausführungsbeispielen eine Einrichtung 140 umfassen, die die "Blickrichtung" des Kamerasystems ändert. Wie beschrieben kann zum Anfertigen eines Panoramabildes das Gesamtgesichtsfeld der Panoramabildkamera geschwenkt werden. Dieses Schwenken, das von Hand durch den Benutzer vorgenommen werden könnte, kann in Ausführungsbeispielen aber natürlich auch von einer Einrichtung vorgenommen werden, die die Ausrichtung des Kamerasystems bzw. dessen Gesamtgesichtsfeldausrichtung im Laufe einer Panoramaaufnahmeoperation ändert. Dies könnte alternativ zu Fig. 1 beispielsweise geschehen durch Rotation des gesamten Kamerasystems 110, wird hier aber durch Drehung der Umlenkeirichtung, wie z.B. eines Spiegels oder Prismas, bewerkstelligt, so dass der Strahlengang der optischen Kanäle des Kamerasystems umgelenkt wird, wie dies ist durch den Doppelpfeil an der Umlenkeinrichtung 140 in Fig. 1 angedeutet ist.. Alternativ wäre es möglich, die Blickrichtungsänderung bzw. Stellungsänderung durch Schalten eines schaltbaren optischen Elementes vorzunehmen, wobei das optische Element ein Umlenken des Strahlenganges bewirkt. Wie gesagt könnte die Variation der Blickrichtung des Kamerasystems aber auch noch händisch von dem Benutzer der Kamera vorgenommen werden.

Es sei betont, dass das Vorhandensein einer Umlenkeinrichtung 140 einen Zweck haben kann, der sich bereits aus einer anderen Anforderung ergibt als der des Stellungswechsels, wie er hier im Folgenden zum Zwecke der Panoramabilderstellung verwendet wird, wie z.B. zu Bildstabilisation, so dass in einem solchen Fall ein bereits bestehendes Kamerasystem ohne größere konstruktive Maßnahmen erweitert werden kann, um eine Panoramabilderstellung gemäß der vorliegenden Anmeldung vorzunehmen. In dem Fall der Doppelverwendung der Umlenkeirichtung 140 zur Bildstabilisation in Richtung quer zur Schwenkachse liegt auch ein Vorteil darin, dass in diesem Fall die Blickrichtungsänderung in sehr kurzer Zeit vorgenommen werden kann, so d.h. die Umlenkeinrichtung die Stellungsänderungen schnell ausführen kann, so dass zwischen den Aufnahmen, die in den unterschiedlichen Richtungen bzw. Stellungen 150, 150' gemacht werden, ein lediglich kleiner Zeitunterschied liegt.

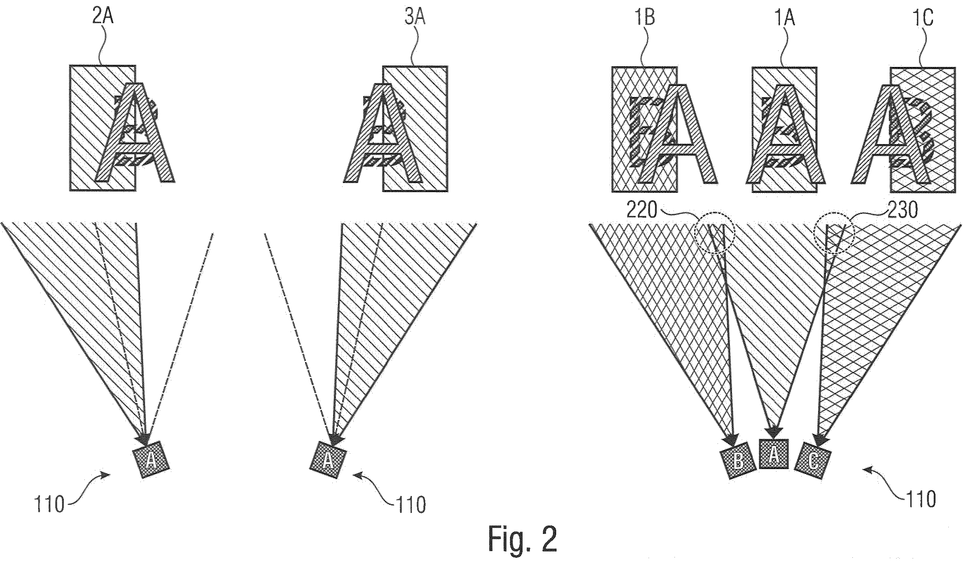

in Fig. 2 ist eine schematische Darstellung gezeigt, die verdeutlichen soll, wie unterschiedliche Sätze von Einzelbildern in einem Ausführungsbeispiel aufgenommen werden könnten. Fig. 2 erhöht dazu zu Veranschaulichungszwecken die Anzahl der Stellungen und ebenso die Anzahl von Kanälen in Richtung des relativen Versatzes des Gesamtgesichtsfeldes zwischen den Stellungen auf drei gegenüber 2, wie es in Fig. 1 dargestellt war, wobei allerdings die Aufteilung in zwei nebeneinanderliegende Teilgesichtsfelder, die quer zur Richtung des Gesamtgesichtsfeldversatzes zwischen den Stellungen in Fig. 2 verläuft, keine Rolle spielt. Die Sequenz von Aufnahmen, wie sie nun beschrieben wird, könnte von dem Kamerasystem 110 automatisch durchlaufen werden, wie z.B. gesteuert von einer Steuerung des Systems 110, wie z.B. auf Betätigung eines Aufnahmeknopfes durch den Benutzer hin, ggf. in einem bestimmten Panoramaaufnahmemodus.

Das gezeigte Kamerasystem 110 verfügt also in diesem Beispiel von Fig. 2 über drei optische Kanäle A, B und C, es ist aber auch eine andere Anzahl optischer Kanäle denkbar. Die optischen Kanäle können zu einer einzelnen Kamera gehören, d.h. die Kanäle fest in ein Gehäuse verbaut sein, wie es in Fig. 1 veranschaulicht wurde, oder es können auch drei nebeneinander angeordnete einzelne Kameras sein, von denen zumindest eine, nämlich hier zumindest die den Kanal A bildende, schwenkbar ist, um in die Teilgesichtsfelder der anderen beiden Kanäle A und C zu blicken. Wie der Figur zu entnehmen ist, sind die drei Kanäle A, B und C nebeneinander angeordnet, so dass diese gleichzeitig Einzelbilder in Richtung eines Panoramablickfeldes aufnehmen können, wobei die jeweiligen Blickrichtungen der einzelnen optischen Kanäle etwas voneinander abweichen, so dass die jeweils aufgenommenen Einzelbilder Überlappbereiche 220, 230 aufweisen. Das geschieht beispielsweise bei einer Aufnahme in einer Stellung 1, was zu Aufnahmen 1A, 1B und 1C führt, die das Gesamtgesichtsfeld mit gegenseitiger Überlappung zwischen 1A und 1B und zwischen 1B und 1C abdecken.

Kanal A kann in einer Stellung 2 so ausgerichtet werden, dass er in die Blickrichtung von Kanal B in Stellung 1 blickt, wie zum Beispiel durch ein Schwenken nach links. Idealisiert wird in Fig. 2 davon ausgegangen, dass das Schwenken des Kanals A zwischen den Stellungen so stattfindet, dass dessen Nodalpunkt konstant bleibt, aber dies ist nur ein Beispiel, und ein Schwenken gemäß Fig. 1 oder eine andere Strahlumlenkung, wie sie dort beschrieben wurde, wäre ebenfalls möglich und ändert nur wenig an dem Konzept und Wesen der nachfolgenden Beschreibung einer Panoramabilderzeugung. In der Stellung 2 kann durch den Kanal A eine Aufnahme 2A erzeugt werden, die im Wesentlichen das gleiche Teilgesichtsfeld abdeckt wie die Aufnahme 1B durch Kanal B in Stellung 1. Außerdem ist noch eine Stellung 3 veranschaulicht, bei der das Gesichtsfeld des Kanals A in Richtung des Gesichtsfeldes des Kanals C in Stellung 1 gebracht wird, um eine Aufnahme 3A dieses Gesichtsfeldes zu erzeugen.

Zur Erläuterung der Vorteile und Funktionsweise der nachfolgenden Verarbeitung der Aufnahmen 1A-1C, 2A und 3B zu einem Gesamtgesichtsfeld sind in Fig. 2 als Beispiele für Objekte in der Szene Buchstaben A und B veranschaulicht. Sie liegen in der Szene in unterschiedlicher Entfernung, was durch ihre unterschiedliche Größe veranschaulicht ist. Anhand der Objekte soll der Einfluss unterschiedlicher Aufnahmezeitpunkte zwischen der Stellungen 1, 2, und 3 und der Einfluss der Szenentiefe, d.h. der unterschiedlichen Tiefe bzw. Objektentfernung von Objekten in der Szene erläutert werden, und die Art und Weise, wie verhindert oder reduziert wird, wie sich dieser Einfluss negativ auf ein aus den Aufnahmen 1A-1C, 2A und 3A erzeugtes Panaromabild auswirken kann. Der Buchstabe B ist hierzu in einer anderen, größeren Entfernung zum Kamerasystem 110 als der Buchstabe A angeordnet.

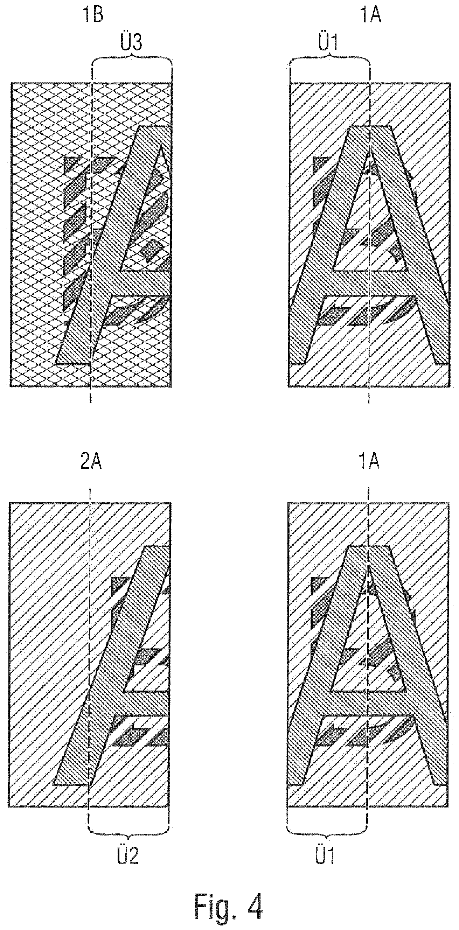

Des Weiteren zeigt Fig. 2 eingekreiste Bereiche 220 und 230, in denen sich die Aufnahmebereiche der Kameras A und B bzw. A und C in der Stellung 1 überlappen. Das bedeutet, beispielsweise im Fall der Überlappung 220, dass das Einzelbild 1A eine Überlappung mit dem Einzelbild 1B aufweist. Genauer weist Einzelbild 1A in dessen linken Bereich eine Überlappung mit dem rechten Bereich von Einzelbild 1B auf. Das heißt, dass in diesem Bereich die gleichen Bildinhalte umfasst sind. Diese Bildinhalte können sich allerdings aufgrund von Parallaxeneffekten unterscheiden, so dass die Bildinhalte möglicherweise nicht identisch sind. Analog gibt es den Überlappungsbereich 230 zwischen den Einzelbildern 1A und 1C, sowie (nicht explizit gezeigte) Überlappungsbereiche zwischen den Einzelbild-Paaren 1A+2A und 1A+3A aufgrund der Koausrichtung von 1B und 1A bzw. 3A und 1C. Auf die Bedeutung der Überlappungsbereiche wird im Zusammenhang mit Fig. 4 näher eingegangen.

Im Beispiel der Fig. 2 nimmt Kanal A des Kamerasystems 110 also das Bild 1A auf, während gleichzeitig von Kanal B das Bild 1B und von Kamera C das Bild 1C aufgenommen wird. Das geschieht bei Stellung 1. Da sich die Kameras bzw. die optischen Kanäle A, B und C nicht an dem gleichen Ort befinden, sondern relativ zueinander etwas versetzt angeordnet sind, können die aufgenommenen Bilder eine Parallaxe aufweisen. Dies ist angedeutet durch die unterschiedlichen Positionen der zuvor erwähnten Buchstaben A und B, die sich in dem Panoramablickfeld befinden.

Im Einzelbild 1A scheint der Buchstabe B mittig hinter dem Buchstaben A zu liegen. Der das in Blickrichtung links von Kanal A liegende Teilgesichtsfeld aufnehmende optische Kanal B, der das Einzelbild 1B erzeugt, sieht hingegen den Buchstaben B relativ zu dem Buchstaben A seitlich nach links versetzt, da sein Nodalpunkt bzw. sein Eintrittspupille seitlich links von dem des Kanals A liegt. Er sieht die Szene etwas von links. Analog nimmt der optische Kanal C das Einzelbild 1C auf, in dem der Buchstabe B relativ zu dem Buchstaben A etwas nach rechts versetzt erscheint. Dieser Effekt, der Parallaxeneffekt, tritt auf, wenn sich die optischen Kanäle seitlich versetzt zueinander befinden und die Szene eine Tiefe aufweist, d.h. die Objekte darin in unterschiedlichen Entfernungen angeordnet sind.

Es sei betont, dass die Reihenfolge des Durchlaufens der Stellungen 1, 2 und 3 nicht relevant ist und auch geändert werden könnte, aber nun sei als zweites die Stellung 2 betrachtet, in welcher der optische Kanal A nach links gedreht wird, um das Einzelbild 2A, und die Stellung 3, in welcher der optische Kanal A nach rechts gedreht wird, um das Einzelbild 3A aufzunehmen. Sie entsprechen hinsichtlich Teilgesichtsfeld der Aufnahme jeweils den Einzelbildern 1B und 1C, aber anders als die Einzelbilder 1B und 1C werden die Aufnahmen 2A und 3A aus einer gleichen Perspektive aufgenommen, wie sie für die Einzelaufnahme 1B vorliegt. Es ist entsprechend in Fig. 2 ersichtlich, dass, da sich der Standort des optischen Kanals A nicht ändert, hier kein Parallaxeneffekt auftritt, d. h. der Buchstabe B überlappt mit dem Buchstaben A in der Aufnahme 2A und 3A in der gleichen Art wie in Aufnahme 1A. In diesem Fall tritt also keine Parallaxe auf.

Im Allgemeinen wäre es also vorteilhaft, ein Panoramabild basierend auf dem Satz von Aufnahmen 1A, 2A und 3A zu erzeugen, da sich dort die Anordnung der Buchstaben A und B relativ zueinander nicht unterscheidet und somit keine Artefakte auftreten.

Es ist jedoch ebenfalls klar, dass der Satz von Aufnahmen 1A, 1B und 1C gleichzeitig aufgenommen wird, wohingegen die Aufnahmen 1A, 2A und 3A einen Satz von Aufnahmen bilden, die mit einem zeitlichen Versatz zueinander erzeugt werden müssen, da zwischen den Einzelaufnahmen die Kamera bzw. der optische Kanal A nach links bzw. rechts geschwenkt werden oder eine andere Manipulation/Umschaltung der Blickrichtung erfolgen muss.

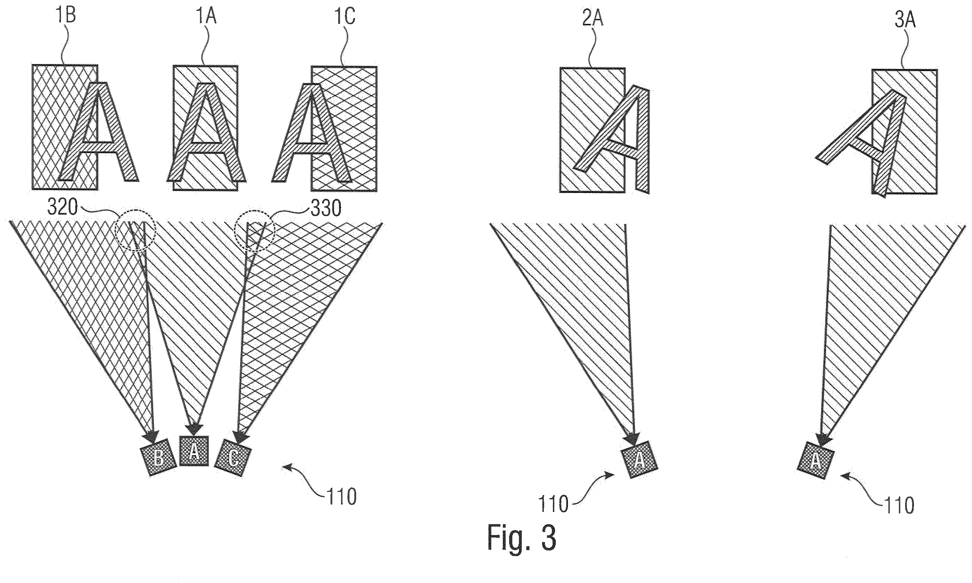

Wenn im Beispiel der Fig. 2 die Anordnung der Buchstaben A und B im Panoramablickfeld statisch ist, wäre es zum Bespiel nicht nötig, auf die zeitgleich aufgenommenen Aufnahmen bzw. Einzelbilder 2A und 3A zurückzugreifen, sondern es wäre vorteilhafter, um ein artefaktfreies Panoramabild zu erzeugen, den Satz zeitlich nacheinander aufgenommenen Einzelbilder 1A, 1B und 1C zu verwenden. Sind jedoch die Objekte in dem Panoramablickfeld nicht statisch, sondern weisen eine Bewegung auf, bzw. handelt es sich um eine dynamische Szene, kann die Situation anders aussehen, wie in Fig. 3 gezeigt ist.

Fig. 3 zeigt schematisch eine ähnliche Anordnung wie die in Fig. 2 gezeigte, nur ist in diesem Fall der Buchstabe A bewegungsbehaftet, im konkreten Beispiel führt dieser Buchstabe eine Drehung im Uhrzeigersinn aus.

Die drei Einzelbilder 1A, 1B und 1C, die zeitgleich aufgenommen wurden, zeigen jeweils den Buchstaben A mit der gleichen Orientierung, da ja die Bilder zeitgleich aufgenommen wurden. Die danach zeitversetzt aufgenommenen Einzelbilder 2A und 3A, die durch den optischen Kanal A aufgenommen werden, nachdem der optische Kanal A nach links und rechts geschwenkt wurde, zeigen den Buchstaben A etwas gedreht. So zeigt das Einzelbild 2A, dass der Buchstabe A etwas nach rechts gedreht ist, relativ zu der Ausrichtung des Buchstabens A in den Aufnahmen 1A, 1B und 1C, da ja das Einzelbild 2A zeitlich nach den Einzelbildern 1A, 1B und 1C aufgenommen wurde. Da das Einzelbild 3A sogar zeitlich noch nach der Aufnahme des Einzelbildes 2A erfolgte, ist der Buchstabe A im Einzelbild 3A noch etwas weiter im Uhrzeigersinn verdreht abgebildet. Fig. 3 dient zur Verdeutlichung des Effektes, dass sich bewegende Objekte in zeitlich nacheinander aufgenommenen Einzelbildern dem Beobachter in anderen Positionen präsentieren können, und es sei noch einmal betont, dass die Reihenfolge des Durchlaufens der Stellungen 1, 2 und 3 auch geändert werden könnte.

Würde das Panoramabild jetzt aus dem Satz von Einzelbildern 1A, 2A und 3A erzeugt werden, gäbe es ein deutliches optisches Artefakt aufgrund der sukzessiven Verdrehung des Buchstabens A. In diesem Fall wäre es günstiger, das Panoramabild basierend auf dem Satz von Einzelbildern 1A, 1B oder 1C anzufertigen.

Je nach Szene kann es vorkommen, dass an den Überlappbereichen 220 und 230 unterschiedliche Szenensituationen vorkommen, d.h. Bewegung und/oder Szenentiefe, so dass auch ein anderer Satz von Einzelbildern für die Panoramabilderzeugung der günstigste sein könnte, wie z.B. eine Erzeugung basierend auf dem Satz von Einzelbildern 1A, 2A oder 3A, oder dem Satz von Einzelbildern 1A, 2A und 1C.

Um zu entscheiden, welche Kombination von Einzelbildern für die Erzeugung des Panoramabildes vorteilhafter ist, ist es in beispielhaften Ausführungsformen möglich, sich die zuvor erwähnten Überlappungsbereiche 220, 230 der Einzelbilder genauer anzusehen, bzw. Paare von Einzelbildern zu untersuchen, die sich in diesen Überlappbereichen überlappen.

Wie in Fig. 2 und 3 gezeigt, weist das Einzelbild 1A auf der hier gezeigten linken Seite einen Überlapp mit dem Einzelbild 1B auf. Selbiges gilt auch für die Paarung zwischen Bild 1A mit dem Einzelbild 2A. Analog weist das Einzelbild 1A einen Überlappungsbereich mit den Einzelbildern 1C und 3A im rechten Bereich des Bildes 1A auf.

Fig. 4 zeigt eine schematische Darstellung, die das Konzept der Entscheidung über die Zusammenstellung des Satzes von Aufnahmen als Grundlage für die Panoramabilderzeugung anhand einer Analyse der Überlappungsbereiche, wie sie durch den Entscheider 120 ausgeführt wird, näher erläutern soll. Gezeigt sind Einzelbilder 1A, 1B und 2A aus Fig. 2, wobei im linken Bereich der Fig. 4 die Einzelbilder 1A und 1B nebeneinander dargestellt sind, im rechten Bereich sind Einzelbilder 1A und 2A gezeigt.

In Fig. 4 sind zu den Einzelbildern die Überlappungsbereiche Ü1 und Ü2 markiert. Dies sind die Bereiche, die sich in den Einzelbildern 1A und 2A auf den gleichen Teil des Panoramablickfeldes beziehen. Es ist augenfällig, dass der Überlappungsbereich Ü1 die gleiche Bildinformation trägt wie der Überlappungsbereich Ü2. Dies ist nicht verwunderlich, da ja der Panoramabildbereich der Fig. 2 keine Bewegung aufweist und somit die zeitversetzt aufgenommenen Einzelbilder 1A und 2A sich im Überlappungsbereich stark ähneln, da ja in diesem Fall der Parallaxeneffekt entfällt, weil diese aus den gleichen Perspektive aufgenommen wurden, d. h. der Standort des Kanals war jeweils der gleiche. Die Einzelbilder 1A und 1B sind in Fig. 4 auch einander gegenübergestellt. Unter diesen Einzelbildern sind die Überlappungsbereiche Ü1 und Ü3 markiert. Hier ist die Ähnlichkeit im Überlappungsbereich nicht so ausgeprägt verglichen zu der Situation in dem Bilderpaar 1A und 2A. Die Bildinformation über die linke Hälfte des Buchstabens A ist zwar in beiden Überlappungsbereichen sehr ähnlich, allerdings ist aufgrund des Parallaxeneffektes im Bild 1A mehr die linke Hälfte des Buchstabens B zu sehen, wohingegen in dem Überlappungsbereich Ü3 der Buchstabe B fast gar nicht zu sehen ist.

Bei einem Vergleich der Ähnlichkeit der Überlappungsbereiche Ü1 und Ü2 im Vergleich zu den Bereichen Ü1 und Ü3 weist das Einzelbildpaar 1A und 2A die größere Ähnlichkeit auf. Für das Erzeugen eines Panoramabildes wäre das Einzelbilder-Paar 1A und 2A die zu bevorzugende Kombination.

Es wird nun, um zu entscheiden, ob die Kombination vom Einzelbild 1A mit 1B oder die Kombination vom Einzelbild 1A mit Einzelbild 2B vorteilhafter für das Gesamtpanoramabild ist, ein Unterschied in dem Überlappungsbereich zwischen Bild 1A und Bild 1B ermittelt und ebenso ein Unterschied zwischen Einzelbild 1A und Einzelbild 2A in dem Überlappungsbereich ermittelt. Je nachdem, welcher der beiden Unterschiede geringer ausfällt, wird eine Kombination von zwei Einzelbildern zur Erzeugung des Panoramabildes ausgewählt.

Zur Bildung eines Unterschiedes bzw. eines Unterschiedswertes im Überlappungsbereich von zwei Einzelbildern ist es beispielsweise denkbar, die Einzelbilder im Überlappungsbereich pixelweise zu vergleichen und die Unterschiedswerte betragsmäßig aufzusummieren. Auch andere Verfahren könnten herangezogen werden, beispielsweise ein Aufsummieren von quadrierten Unterschiedswerten, die pixelweise zu bestimmen sind, oder das Auswerten eines Korrelationsmaximums bei gegenseitiger Verschiebung der Einzelbilderpaare entlang der Richtung, entlang der die Gesichtsfelder nebeneinander liegen.

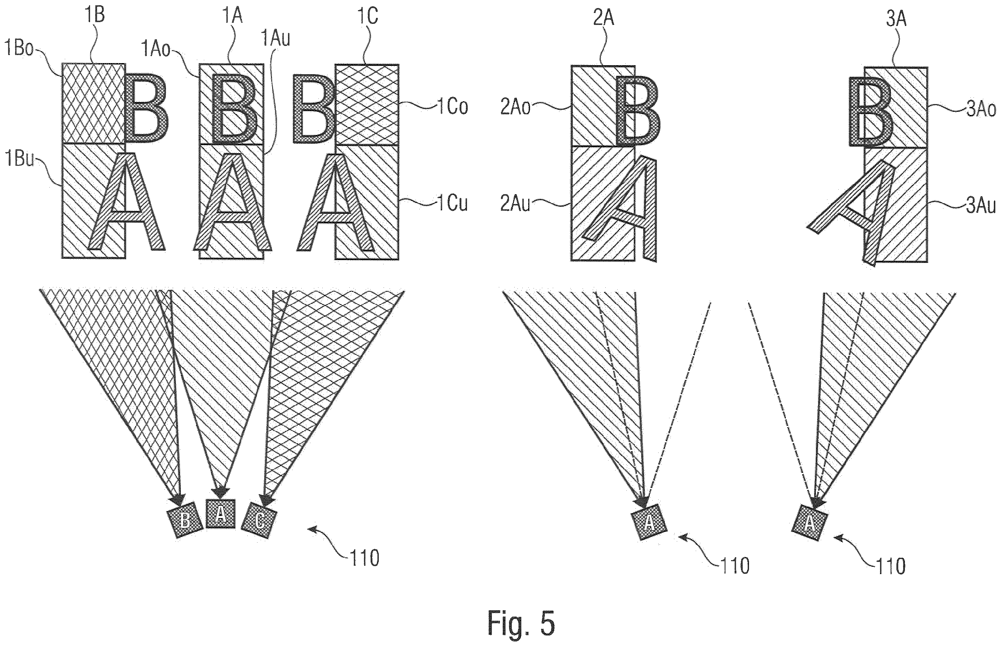

Fig. 5 zeigt schematisch ein weiteres Ausführungsbeispiel, bei dem die Einzelbilder in Segmente oder Querschnitte unterteilt werden, für die getrennt entschieden wird, ob zur Erzeugung des Panoramabildes die entsprechend zeitgleich aufgenommenen Abschnitte/Querschnitte verwendet werden oder die zeitlich aufeinanderfolgend aufgenommenen Querschnitte, die aber dann keine Parallaxe aufweisen.

Das Panoramablickfeld dieses Beispiels ist dadurch gekennzeichnet, dass der Buchstabe A bewegungsbehaftet ist, d. h. er weist eine zeitliche Veränderung durch Drehung im Uhrzeigersinn auf, wohingegen der Buchstabe B statisch ist. In diesem Fall ist der Buchstabe B oberhalb des Buchstabens A angeordnet, wodurch sich der Panoramabildbereich in einen oberen Bereich ohne Bewegung und einen unteren Bereich mit Bewegung aufteilen lässt.

In Fig. 5 ist daher jedes Einzelbild in einen oberen und unteren Bereich aufgeteilt, z. B. ist das Einzelbild 1A in den unteren Bereich 1Au und den oberen Bereich 1Ao aufgeteilt, für die anderen Einzelbilder 1B, 1C, 2A und 3A gilt sinngemäß dasselbe.

Bei der Auswahl der oberen oder unteren Halbbilder zur Verwendung für die Konstruktion des Panoramabildes wird nun zuerst der obere Bereich besprochen. Im oberen Bereich gilt aufgrund der fehlenden Bewegung eine Analyse, die im Wesentlichen der der Fig. 2 entspricht. Ausgehend vom oberen Bildbereich 1Ao sind die Einzelbildquerschnitte 2Ao und 3Ao gegenüber den Abschnitten 1Bo und 1Co zu bevorzugen, da die Einzelbildquerschnitte 2Ao und 3Ao keine Parallaxe aufweisen und daher zu erwarten ist, dass diese das stimmigere Panoramabild ergeben.

Im unteren Bereich der Einzelbilder ist es im vorliegenden Fall vorteilhafter, das Panoramabild basierend auf den Einzelbildquerschnitten 1Au, 1Bu und 1Cu zu erzeugen, da die Einzelbildquerschnitte 2Au und 3Au einen rotierten Buchstaben A aufweisen. Da in der menschlichen Wahrnehmung häufig eine Drehung als störender als ein Parallaxeneffekt empfunden werden kann und auch die Ähnlichkeiten in den Überlappungsbereichen aufgrund der Drehung geringer ausfallen, werden im vorliegenden Fall die parallaxenbehafteten Einzelbildquerschnitte bevorzugt zur Konstruktion des Panoramabildes verwendet.

In einem nicht dargestellten Fall, in dem die Drehung des Buchstabens A deutlich langsamer vonstattengeht, d. h. dass das Einzelbild 2Au einen nur geringfügig verdrehten Buchstaben A zeigen würde, wäre es denkbar, dass in diesem Fall der Einzelbildquerschnitt 2Au eine größere Ähnlichkeit mit dem entsprechenden Überlappungsbereich mit dem Einzelbildquerschnitt 1Au aufweist, und dass in diesem Fall die Kombination aus 1Au und 2Au vorteilhafter wäre gegenüber der parallaxenbehafteten Kombination 1Au und 1Bu, allerdings wäre es dann auch möglich, dass im Einzelbild 3A die Verdrehung des Buchstabens A schon deutlicher wahrzunehmen ist und in diesem Fall die Kombination von 1Au mit 1Cu gegenüber der Kombination 1Au und 3Au zu bevorzugen ist.

Im Allgemeinen kann festgehalten werden, dass die Beurteilung von statischen Szenen, von Szenen mit Objekten in relativ großer Entfernung und Szenen mit Objekten in einem eingeschränkten Entfernungsbereich verhältnisweise unproblematisch ist.

Des Weiteren ist denkbar, in Fortführung der Unterteilung der Einzelbilder in Einzelbildquerschnitte, wie in Fig. 5 gezeigt, dass die Einzelbilder selbst noch in weitere Querschnitte zerlegt werden können, beispielsweise in drei, vier oder noch mehr Querschnittsbereiche. Dies kann in Fällen sinnvoll sein, in denen sich ein Einzelbild in einer Richtung senkrecht zur Schwenkrichtung des Panoramabildes in Bereiche unterteilt, die entweder statisch sind oder eine Bewegung aufweisen.

Um zu beurteilen, ob eine weitere Unterteilung in verfeinerte Querschnitte sinnvoll ist, kann eine solche Unterteilung probeweise vorgenommen werden, und die Ähnlichkeit der unterschiedlichen Querschnitte kann berechnet werden. In dem Fall, dass sich die jeweiligen Unterschiede der Querschnitte als nicht signifikant erweisen, kann eine weitere verfeinerte Unterteilung in Querschnitte unterbleiben, in dem Fall, dass deutliche Unterschiede zutage treten, kann gefolgert werden, dass eine feinere Unterteilung in Querschnitte sinnvoll ist und diese kann entsprechend vorgenommen werden. Eine derartige Betrachtung funktioniert für eine größere Anzahl von Szenen und ist nur noch für Bildausschnitte problematisch, die sowohl Bewegung als auch eine Tiefenstaffelung enthalten. Die Tiefenstaffelung führt zu den zuvor diskutierten Parallaxeneffekten.

In der Literatur werden Anordnungen beschrieben, die Parallaxeneffekte messen und ausgleichen sollen. Dabei handelt es sich um zeitgleiche Aufnahme von Einzelbildern mit mehreren optischen Kanälen, die verschiedene feste Blickrichtungen haben. Jeder dieser Kanäle ist jedoch doppelt vorhanden, wobei die Basisbreite bewusst so groß wie möglich gewählt wird. Auf diese Weise wird jedes Teilgesichtsfeld von zwei Standorten aufgenommen. Diese doppelte Aufnahme der Szene mit zwei Kameras mit einer gewissen Basisbreite/Basisabstand erlaubt es, eine Disparität zwischen diesen beiden Ansichten zu erzeugen, und durch diese Disparität kann für das komplette Gesichtsfeld die Parallaxe kompensiert werden, um schließlich ein artefaktfreies Gesamtbild zu erhalten.

Es gibt jedoch Szenen, bei denen durch Verdeckungseffekte entweder bereits bei der Tiefenschätzung oder aber bei einer Kompensation Lücken entstehen. Es gibt dann Bildteile, für die entweder keine Tiefenschätzung möglich ist, oder für die die Parallaxkompensation Szenenbereiche freilegt, die von keinem der optischen Kanäle aufgenommen wurden. In diesem Fall ist eine Parallaxkompensation nicht fehlerfrei möglich. Selbst wenn die Szene statisch ist, lässt sich kein artefaktfreies oder fehlerfreies Panorama erzeugen. Wird jedoch zusätzlich mindestens ein Kanal so gedreht oder abgelenkt, dass dieser Kanal alle Bereiche des Gesichtsfeldes erfasst, so kann bei statischen Szenen ohne Parallaxkompensation ein Panoramabild erzeugt werden. Dies ist im zuvor beschriebenen Verdeckungsfall nützlich, kann aber auch ohne Verdeckung geschehen, um die komplexe Parallaxkompensation zu vermeiden. Eine Vorrichtung zur Aufnahme der Einzelbilder kann einen Spiegel oder eine andere Einrichtung zur Ablenkung der Blickrichtung enthalten. In diesem Fall ist der Einsatz des zuvor beschriebenen Verfahrens besonders vorteilhaft, da die mechanischen Voraussetzungen bereits gegeben sind. Änderungen sind lediglich bei der Ansteuerung des Spiegels oder bei der Bildauswertung notwendig.

Des Weiteren kann es in Ausführungsbeispielen vorgesehen sein, nicht nur mit einem Kanal alle Bildbereiche aufzunehmen, wie in den zuvor genannten Beispielen mit Kanal A, sondern auch mit den übrigen optischen Kanälen B und C. Werden die Blickrichtungen der anderen optischen Kanäle gleichzeitig mit dem ersten Kanal verändert, verlängert sich die Aufnahmezeit dadurch nicht.

Eine schnelle Umschaltung der Blickrichtung, beispielsweise um die Einzelbilder 2A und 3A aufzunehmen, kann erreicht werden durch die Drehung des Gesamtsystems oder zumindest des Kamerasystems, durch ein schaltbares optisches Element, beispielsweise mittels einer durchstimmbaren Linse oder einer Flüssigkristalllinse oder einer Liquid Lens, oder durch Drehen bzw. Kippen eines Spiegels oder Prismas im Strahlengang. Solch ein Spiegel oder Prisma könnte mittels einer Piezoansteuerung oder einem Elektromotor angetrieben sein.

Insbesondere durch die Verwendung von schaltbaren optischen Elementen oder durch Drehen oder Kippen eines Spiegels oder Prismas können Schaltzeiten im Bereich von einigen 10 Millisekunden erreicht werden, was mit üblichen Belichtungszeiten bei schwacher Beleuchtung vergleichbar ist.

In allen Fällen ist darauf zu achten, dass durch die Drehung oder Verkippung keine Parallaxe eingeführt wird oder dass diese zumindest minimiert wird. Es kann ausreichen, dass erreicht wird, dass die Verschiebung durch Parallaxe geringer als die Tiefenunschärfe ausfällt.

Ist das verwendete Kamerasystem mit einem Autofokus ausgestattet, können und sollten alle Aufnahmen mit einer bei der ersten Aufnahme ermittelten Einstellung durchgeführt werden. Dies reduziert die Zeit zwischen den Aufnahmen auf die Zeit, die das Umschalten der Blickrichtung benötigt. Eine gleiche Fokuseinstellung aller Teilbilder ist außerdem für das Zusammensetzen des Panoramabildes günstig.

Ein solches erfindungsgemäßes Kamerasystem kann in Mobiltelefonen und Fahrzeugkameras angewendet werden, und kann ebenso Anwendung finden in der Robotik, Videokonferenzsystemen, Fernerkundung, medizinischen Anwendungen und Machine Vision. Ebenso ist das erfindungsgemäße Verfahren für Mehrkanalkamerasysteme geeignet, in denen bereits ein Spiegel oder ein anderer Mechanismus zur Steuerung der Blickrichtung vorhanden ist. Dies ist beispielsweise bei Systemen mit gefaltetem Strahlengang der Fall.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Element einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein. Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung zur Erzeugung eines Panoramabildes eines Panoramablickfeldes (150), die ausgebildet ist für
zeitgleiches Aufnehmen eines ersten Satzes von ersten Einzelbildern (1A, 1B, 1C), die zusammen das Panoramablickfeld (150) abdecken, mit mehreren optischen Kanälen eines ersten Kamerasystems (110);
Aufnehmen von zumindest einem zweiten Einzelbild (2A, 3A) mit einem der mehreren optischen Kanäle des ersten Kamerasystems (110), so dass das zumindest eine zweite Einzelbild (2A, 3A) zusammen oder zusammen mit einem durch den einen der mehreren optischen Kanäle aufgenommenen ersten Einzelbild einen zweiten Satz von Einzelbildern ergibt, die zeitversetzt zueinander aufgenommen sind und das Panoramablickfeld (150) abdecken;
Auswählen, für zumindest einen Bildbereich des Panoramabildes, eines oder mehrerer Bilder aus einer Teilmenge aus den ersten Einzelbildern (1A, 1B, 1C) und dem zumindest einen zweiten Einzelbild (2A, 3A), die mit dem zumindest einen Bildbereich überlappt; und
Konstruieren des Panoramabildes unter Verwendung des einen oder der mehreren Bildern in dem zumindest einen Bildbereich,
**dadurch gekennzeichnet, dass** die Vorrichtung ferner ausgebildet ist für ein
Bestimmen eines ersten Unterschiedes zwischen einem ersten Paar von ersten Einzelbildern, die zumindest einen Abschnitt des Panoramablickfelds (150) betreffen und im Panoramablickfeld (150) einander in einem ersten Überlappungsbereich überlappen, im dem ersten Überlappungsbereich,
Bestimmen eines zweiten Unterschiedes zwischen einem zweiten Paar von Einzelbildern aus dem zweiten Satz von Einzelbildern, die den Abschnitt des Panoramablickfelds (150) betreffen und im Panoramablickfeld (150) einander in einem zweiten Überlappungsbereich überlappen, im dem zweiten Überlappungsbereich,
Auswählen des ersten Paars für das Konstruieren des Panoramabildes in dem Abschnitt, wenn der erste Unterschied kleiner als der zweite Unterschied ist, und
Auswählen des zweiten Paars für das Konstruieren des Panoramabildes in dem Abschnitt, wenn der erste Unterschied größer als der zweite Unterschied ist.

2. Vorrichtung gemäß Anspruch 1, wobei die Teilmenge zumindest ein Einzelbild aus dem ersten Satz und zumindest das zumindest eine zweite Einzelbild umfasst.

3. Vorrichtung gemäß Anspruch 1 oder 2, wobei die ersten Einzelbilder entlang einer ersten Richtung in dem Panoramablickfeld (150) nebeneinanderliegen, wobei die Vorrichtung ausgebildet ist, um die Bestimmung des ersten und zweiten Unterschieds und die darauf basierende Auswahl des ersten oder zweiten Paars entlang einer zu der ersten Richtung senkrechten zweiten Richtung unterteilt in Streifen, die quer zu der zweiten Richtung verlaufen, durchzuführen, so dass die Auswahl für unterschiedliche Streifen unterschiedlich ausfallen kann.

4. Vorrichtung gemäß einem der Ansprüche 1 bis 3, wobei die ersten Einzelbilder entlang einer ersten Richtung in dem Panoramablickfeld (150) nebeneinanderliegen, wobei die Vorrichtung ausgebildet ist, um für einen ersten Teilbildbereich eine erste Menge eines oder mehrerer vorbestimmter Bilder auszuwählen und für einen zweiten Teilbildbereich, der entlang der ersten Richtung mit dem ersten Teilbildbereich überlappt, aber zu dem ersten Teilbildbereich in einer zu der ersten Richtung senkrechten zweiten Richtung versetzt ist, eine zweite Menge eines oder mehrerer vorbestimmter Bilder auszuwählen, die zu der ersten Teilmenge unterschiedlich ist.

5. Vorrichtung gemäß einem der Ansprüche 1 bis 4, wobei die ersten Einzelbilder entlang einer ersten Richtung in dem Panoramablickfeld (150) nebeneinanderliegen, wobei die Vorrichtung ausgebildet ist, um die Auswahl entlang einer zu der ersten Richtung senkrechten zweiten Richtung unterteilt in Streifen durchzuführen, so dass die Auswahl für unterschiedliche Streifen unterschiedlich ausfallen kann.

6. Vorrichtung gemäß Anspruch 3 oder 5, die ausgebildet ist, um die Unterteilung in Streifen adaptiv zu verfeinern.

7. Vorrichtung gemäß einem der vorherigen Ansprüche, wobei das Aufnehmen des zumindest eines zweiten Einzelbildes (2A, 3A) so durchgeführt wird, dass der zweite Satz von Einzelbildern gegenüber dem ersten Satz von ersten Einzelbildern mit einer kleineren Parallaxe aufgenommen ist.

8. Vorrichtung gemäß einem der Ansprüche 1 bis 7, wobei das Aufnehmen des zumindest einen zweiten Einzelbildes (2A, 3A) so durchgeführt wird, dass die Einzelbilder des zweiten Satzes von Einzelbildern mit unterschiedlicher Blickrichtung aufgenommen sind, und die Vorrichtung ausgebildet ist, um zwischen den Einzelbildern des zweiten Satzes von Einzelbildern eine Blickrichtungsvariation durchzuführen durch:
Rotieren des einen optischen Kanals oder des Kamerasystems (110), und/oder
Schalten eines schaltbaren optischen Elements, das ein Umlenken eines Strahlenganges des einen optischen Kanals oder eines Strahlenganges der mehreren Kanäle des Kamerasystems (110) bewirkt; und/oder
Rotieren eines Spiegels oder Prismas zum Umlenken eines Strahlenganges des einen der mehreren optischen Kanäle oder eines Strahlenganges der mehreren Kanäle des Kamerasystems (110).

9. Vorrichtung gemäß einem der vorherigen Ansprüche, ein zweites Kamerasystem umfassend und ferner ausgebildet für ein
zeitgleiches Aufnehmen eines dritten Satzes von dritten Einzelbildern (1A, 1B, 1C), die zusammen das Panoramablickfeld (150) abdecken, mit mehreren optischen Kanälen des zweiten Kamerasystems, wobei das zweite Kamerasystem relativ zum ersten Kamerasystem versetzt angeordnet ist;
Aufnehmen von zumindest einem vierten Einzelbild (2A, 3A) mit einem der mehreren optischen Kanäle des zweiten Kamerasystems, so dass das zumindest eine vierte Einzelbild (2A, 3A) zusammen oder zusammen mit einem durch den einen der mehreren optischen Kanäle aufgenommenen dritten Einzelbild einen vierten Satz von Einzelbildern ergibt, die zeitversetzt zueinander aufgenommen sind und das Panoramablickfeld (150) abdecken; und
Konstruieren eines weiteren Panoramabildes oder einer Tiefenkarte für das Panoramabild auf Basis des dritten Satzes von dritten Einzelbildern und des zumindest einen vierten Einzelbildes.

10. Vorrichtung gemäß Anspruch 9, ferner ausgebildet für ein
Schätzen einer Parallaxe basierend auf der Tiefenkarte; und
Kompensieren der Parallaxe basierend auf der geschätzten Parallaxe.

11. Vorrichtung gemäß Anspruch 9, ferner ausgebildet für ein
Auswählen, für den zumindest einen Bildbereich des weiteren Panoramabildes, eines oder mehrerer Bilder aus einer Teilmenge aus den dritten Einzelbildern (1A, 1B, 1C) und dem zumindest einen vierten Einzelbild (2A, 3A), wobei die Auswahl für den Bildbereich des weiteren Panoramabildes der Auswahl für den Bildbereich des Panoramabildes aus der Teilmenge aus den ersten Einzelbildern (1A, 1B, 1C) und dem zumindest einen zweiten Einzelbild entspricht.

12. Vorrichtung gemäß einem der Ansprüche 1 bis 9, ein zweites Kamerasystem umfassend und ferner ausgebildet für ein
zeitgleiches Aufnehmen eines dritten Satzes von dritten Einzelbildern (1A, 1B, 1C), die zusammen das Panoramablickfeld (150) abdecken, mit mehreren optischen Kanälen des zweiten Kamerasystems, wobei das zweite Kamerasystem relativ zum ersten Kamerasystem versetzt angeordnet ist; und
Ausgleichen von Parallax-Effekten in dem Panoramabild unter Verwendung des dritten Satzes von dritten Einzelbildern.

13. Vorrichtung gemäß einem der Ansprüche 1 bis 12, ferner ausgebildet für ein Aufnehmen von zumindest einem weiteren Einzelbild mit einem weiteren der mehreren optischen Kanäle des ersten Kamerasystems (110).

14. Verfahren zur Erzeugung eines Panoramabildes eines Panoramablickfeldes (150), umfassend:
zeitgleiches Aufnehmen eines ersten Satzes von ersten Einzelbildern (1A, 1B, 1C), die zusammen das Panoramablickfeld (150) abdecken, mit mehreren optischen Kanälen eines ersten Kamerasystems (110);
Aufnehmen von zumindest einem zweiten Einzelbild (2A, 3A) mit einem der mehreren optischen Kanäle des ersten Kamerasystems (110), so dass das zumindest eine zweite Einzelbild (2A, 3A) zusammen oder zusammen mit einem durch den einen der mehreren optischen Kanäle aufgenommenen ersten Einzelbild einen zweiten Satz von Einzelbildern ergibt, die zeitversetzt zueinander aufgenommen sind und das Panoramablickfeld (150) abdecken;
Auswählen, für zumindest einen Bildbereich des Panoramabildes, eines oder mehrerer Bilder aus einer Teilmenge aus den ersten Einzelbildern (1A, 1B, 1C) und dem zumindest einen zweiten Einzelbild (2A, 3A), die mit dem zumindest einen Bildbereich überlappt; und
Konstruieren des Panoramabildes unter Verwendung des einen oder der mehreren Bildern in dem zumindest einen Bildbereich,
**dadurch gekennzeichnet, dass** das Verfahren ferner folgende Schritte aufweist:
Bestimmen eines ersten Unterschiedes zwischen einem ersten Paar von ersten Einzelbildern, die zumindest einen Abschnitt des Panoramablickfelds (150) betreffen und im Panoramablickfeld (150) einander in einem ersten Überlappungsbereich überlappen, im dem ersten Überlappungsbereich,
Bestimmen eines zweiten Unterschiedes zwischen einem zweiten Paar von Einzelbildern aus dem zweiten Satz von Einzelbildern, die den Abschnitt des Panoramablickfelds (150) betreffen und im Panoramablickfeld (150) einander in einem zweiten Überlappungsbereich überlappen, im dem zweiten Überlappungsbereich,
Auswählen des ersten Paars für das Konstruieren des Panoramabildes in dem Abschnitt, wenn der erste Unterschied kleiner als der zweite Unterschied ist, und
Auswählen des zweiten Paars für das Konstruieren des Panoramabildes in dem Abschnitt, wenn der erste Unterschied größer als der zweite Unterschied ist.

## Claims

1. Device for generating a panoramic image of a panoramic visual field (150), the device being configured for:
simultaneous capturing of a first set of first individual images (1A, 1B, 1C) which together cover the panoramic visual field (150), by means of several optical channels of a first camera system (110);
capturing at least one second individual image (2A, 3A) by means of one of the several optical channels of the first camera system (110), so that the at least one second individual image (2A, 3A) results, together or together with a first individual image captured by the one of the several optical channels, in a second set of individual images which are captured with mutual time offset and which cover the panoramic visual field (150);
selecting, for at least one image area of the panoramic image, one or more images among a subgroup which is comprised of the first individual images (1A, 1B, 1C) and of the at least one second individual image (2A, 3A) and which overlaps with the at least one image area; and
rendering the panoramic image while using the one or more images within the at least one image area;
**characterized in that** the device is further configured for
determining, within a first overlap area, a first difference between a first pair of first individual images which relate to at least one portion of the panoramic visual field (150) and which overlap each other, within the panoramic visual field (150), within the first overlap area,
determining, within a second overlap area, a second difference between a second pair of individual images from the second set of individual images which relate to the portion of the panoramic visual field (150) and which overlap each other, within the panoramic visual field (150), within the second overlap area,
selecting the first pair for rendering the panoramic image within the portion if the first difference is smaller than the second difference, and
selecting the second pair for rendering the panoramic image within the portion if the first difference is larger than the second difference.

2. Device as claimed in claim 1, wherein the subgroup includes at least one individual image from the first set and at least the at least one second individual image.

3. Device as claimed in claim 1 or 2, wherein the first individual images are located next to one another along a first direction within the panoramic visual field (150), the device being configured to perform determining of the first and second differences and selecting, on the basis thereof, of the first or second pair along a second direction, which is perpendicular to the first direction, in such a manner that said determining is subdivided into stripes that are transverse to the second direction, so that the selections for different stripes may differ.

4. Device as claimed in any of claims 1 to 3, wherein the first individual images are located next to one another along a first direction within the panoramic visual field (150), the device being configured to select a first group of one or more predetermined images for a first partial image area and to select a second group of one or more predetermined images, which differs from the first subgroup, for a second partial image area which overlaps with the first partial image area along the first direction but is offset from the first partial image area in a second direction perpendicular to the first direction.

5. Device as claimed in any of claims 1 to 4, wherein the first individual images are located next to one another along a first direction within the panoramic visual field (150), the device being configured to perform the selection along a second direction, which is perpendicular to the first direction, in a manner that is subdivided into stripes, so that the selections for different stripes may differ.

6. Device as claimed in claim 3 or 5, configured to adaptively refine the subdivision into stripes.

7. Device as claimed in any of the previous claims, wherein capturing of the at least one second individual image (2A, 3A) is performed such that the second set of individual images is captured with a smaller parallax as compared to the first set of first individual images.

8. Device as claimed in any of claims 1 to 7, wherein capturing of the at least one second individual image (2A, 3A) is performed such that the individual images of the second set of individual images are captured with different viewing directions, and the device being configured to perform, between the individual images of the second set of individual images, a variation in the viewing direction by:
rotating the one optical channel or the camera system (110), and/or
switching a switchable optical element, which causes deflection of an optical path of the one optical channel or of an optical path of the several channels of the camera system (110); and/or
rotating a mirror or prism for deflecting an optical path of the one or more optical channels or an optical path of the several channels of the camera system (110).

9. Device as claimed in any of the previous claims, including a second camera system and further configured for
simultaneous capturing of a third set of third individual images (1A, 1B, 1C) which together cover the panoramic visual field (150), by means of several optical channels of the second camera system, the second camera system being arranged offset in relation to the first camera system;
capturing at least one fourth individual image (2A, 3A) by means of one of the several optical channels of the second camera system, so that the at least one fourth individual image (2A, 3A) results/result, by itself/by themselves or together with a third individual image captured by the one of the several optical channels, in a fourth set of individual images which are captured with mutual time offset and which cover the panoramic visual field (150); and
rendering a further panoramic image or a depth map for the panoramic image on the basis of the third set of third individual images and of the at least one fourth individual image.

10. Device as claimed in claim 9, further configured for
estimating a parallax on the basis of the depth map; and
compensating for the parallax on the basis of the estimated parallax.

11. Device as claimed in claim 9, further configured for
selecting, for the at least one image area of the further panoramic image, one or more images from a subgroup comprised of the third individual images (1A, 1B, 1C) and of the at least one fourth individual image (2A, 3A), said selection for the image area of the further panoramic image corresponding to the selection for the image area of the panoramic image from the subgroup comprised of the first individual images (1A, 1B, 1C) and of the at least one second individual image.

12. Device as claimed in any of claims 1 to 9, including a second camera system and being further configured for
simultaneous capturing of a third set of third individual images (1A, 1B, 1C) which together cover the panoramic visual field (150), by means of several optical channels of the second camera system, the second camera system being arranged offset in relation to the first camera system; and
compensating for parallax effects within the panoramic image while using the third set of third individual images.

13. Device as claimed in any of claims 1 to 12, further configured for
capturing at least one further individual image by means of a further one of the several optical channels of the first camera system (110).

14. Method of generating a panoramic image of a panoramic visual field (150), including:
simultaneous capturing of a first set of first individual images (1A, 1B, 1C) which together cover the panoramic visual field (150), by means of several optical channels of a first camera system (110);
capturing at least one second individual image (2A, 3A) by means of one of the several optical channels of the first camera system (110), so that the at least one second individual image (2A, 3A) results, together or together with a first individual image captured by the one of the several optical channels, in a second set of individual images which are captured with mutual time offset and which cover the panoramic visual field (150);
selecting, for at least one image area of the panoramic image, one or more images among a subgroup which is comprised of the first individual images (1A, 1B, 1C) and of the at least one second individual image (2A, 3A) and which overlaps with the at least one image area; and
rendering the panoramic image while using the one or more images within the at least one image area;
**characterized in that** the method further comprises the following steps:
determining, within a first overlap area, a first difference between a first pair of first individual images which relate to at least one portion of the panoramic visual field (150) and which overlap each other, within the panoramic visual field (150), within the first overlap area,
determining, within a second overlap area, a second difference between a second pair of individual images from the second set of individual images which relate to the portion of the panoramic visual field (150) and which overlap each other, within the panoramic visual field (150), within the second overlap area,
selecting the first pair for rendering the panoramic image within the portion if the first difference is smaller than the second difference, and
selecting the second pair for rendering the panoramic image within the portion if the first difference is larger than the second difference.

## Revendications

1. Dispositif permettant de générer une image panoramique d'un champ de vision panoramique (150) qui est conçu pour
enregistrer simultanément un premier ensemble de premières images individuelles (1A, 1B, 1C) qui couvrent ensemble le champ de vision panoramique (150), par plusieurs canaux optiques d'un premier système de caméra (110);
enregistrer au moins une deuxième image individuelle (2A, 3A) par un des plusieurs canaux optiques du premier système de caméra (110), de sorte que l'au moins une deuxième image individuelle (2A, 3A) résulte, ensemble ou ensemble avec une première image individuelle enregistrée par l'un des plusieurs canaux optiques, en un deuxième ensemble d'images individuelles qui sont enregistrées de manière décalée l'une par rapport à l'autre et couvrent le champ de vision panoramique (150);
sélectionner, pour au moins une zone d'image de l'image panoramique, une ou plusieurs images d'une quantité partielle parmi les premières images individuelles (1A, 1B, 1C) et l'au moins une deuxième image individuelle (2A, 3A) qui vient en chevauchement avec l'au moins une zone d'image; et
construire l'image panoramique à l'aide de l'une ou des plusieurs images dans l'au moins une zone d'image,
**caractérisé par le fait que** le dispositif est par ailleurs conçu pour une détermination d'une première différence entre une première paire de premières images individuelles qui concernent au moins un segment du champ de vision panoramique (150) et qui viennent en chevauchement l'une avec l'autre, dans le champ de vision panoramique (150), dans une première zone de chevauchement dans la première zone de chevauchement,
détermination d'une deuxième différence entre une deuxième paire d'images individuelles du deuxième ensemble d'images individuelles qui concernent le segment du champ de vision panoramique (150) et dans le champ de vision panoramique (150) et qui viennent en chevauchement l'une avec l'autre dans une deuxième zone de chevauchement, dans la deuxième zone de chevauchement,
sélectionner la première paire pour la construction de l'image panoramique dans le segment lorsque la première différence est inférieure à la deuxième différence, et
sélectionner la deuxième paire pour la construction de l'image panoramique dans le segment lorsque la première différence est supérieure à la deuxième différence.

2. Dispositif selon la revendication 1, dans lequel la quantité partielle comporte au moins une image individuelle du premier ensemble et au moins l'au moins une deuxième image individuelle.

3. Dispositif selon la revendication 1 ou 2, dans lequel les premières images individuelles sont adjacentes l'une à l'autre le long d'une première direction dans le champ de vision panoramique (150), dans lequel le dispositif est conçu pour effectuer la détermination de la première et de la deuxième différence et la sélection qui suit de la première ou de la deuxième paire le long d'une deuxième direction perpendiculaire à la première direction subdivisée en bandes qui s'étendent transversalement à la deuxième direction, de sorte que la sélection puisse être différente pour différentes bandes.

4. Dispositif selon l'une des revendications 1 à 3, dans lequel les premières images individuelles se situent l'une à côté de l'autre le long d'une première direction dans le champ de vision panoramique (150), dans lequel le dispositif est conçu pour sélectionner, pour une première zone d'image partielle, une première quantité d'une ou de plusieurs images prédéterminées et, pour une deuxième zone d'image partielle qui vient en chevauchement, le long de la première direction, avec la première zone d'image partielle, mais est décalée par rapport à la première zone d'image partielle, une deuxième quantité d'une ou de plusieurs images prédéterminées qui est différente de la première quantité partielle.

5. Dispositif selon l'une des revendications 1 à 4, dans lequel les premières images individuelles se situent l'une à côté de l'autre le long d'une première direction dans le champ de vision panoramique (150), dans lequel le dispositif est conçu pour effectuer la sélection le long d'une deuxième direction perpendiculaire à la première direction subdivisée en bandes, de sorte que la sélection puisse résulter différente pour différentes bandes.

6. Dispositif selon la revendication 3 ou 5, qui est conçu pour affiner de manière adaptative la subdivision en bandes.

7. Dispositif selon l'une des revendications précédentes, dans lequel l'enregistrement de l'au moins une deuxième image individuelle (2A, 3A) est effectuée de sorte que le deuxième ensemble d'images individuelles soit enregistré, par rapport au premier ensemble de premières images individuelles, avec un axe parallèle plus petit.

8. Dispositif selon l'une des revendications 1 à 7, dans lequel l'enregistrement de l'au moins une deuxième image individuelle (2A, 3A) est effectuée de sorte que les images individuelles du deuxième ensemble d'images individuelles soient enregistrées avec une direction de vision, et le dispositif est conçu pour effectuer, entre les images individuelles du deuxième ensemble d'images individuelles, une variation de direction de vision par le fait de:
faire tourner l'un canal optique ou le système de caméra (110), et/ou
commuter un élément optique commutable qui provoque une déviation d'un trajet de faisceau de l'un canal optique ou d'un trajet de faisceau des plusieurs canaux du système de caméra (110); et/ou
faire tourner un miroir ou un prisme pour dévier un trajet de faisceau de l'un des multiples canaux optiques ou un trajet de faisceau des multiples canaux du système de caméra (110).

9. Dispositif selon l'une des revendications précédentes, comportant un deuxième système de caméra et conçu par ailleurs pour
enregistrer simultanément un troisième ensemble de troisièmes images individuelles (1A, 1B, 1C) qui couvrent ensemble le champ de vision panoramique (150), avec plusieurs canaux optiques du deuxième système de caméra, où le deuxième système de caméra est disposé de manière décalée par rapport au premier système de caméra;
enregistrer au moins une quatrième image individuelle (2A, 3A) par un des plusieurs canaux optiques du deuxième système de caméra, de sorte que l'au moins une quatrième image individuelle (2A, 3A) résulte, ensemble ou ensemble avec une troisième image individuelle enregistrée par l'un des plusieurs canaux optiques, en un quatrième ensemble d'images individuelles qui sont enregistrées de manière décalée l'une par rapport à l'autre et couvrent le champ de vision panoramique (150); et
construire une autre image panoramique ou une carte de profondeur pour l'image panoramique sur base du troisième ensemble de troisièmes images individuelles et de l'au moins une quatrième image individuelle.

10. Dispositif selon la revendication 9, conçu par ailleurs pour estimer un axe parallèle sur base de la carte de profondeur; et compenser l'axe parallèle sur base de l'axe parallèle estimé.

11. Dispositif selon la revendication 9, conçu par ailleurs pour sélectionner, pour l'au moins une zone d'image de l'autre image panoramique, une ou plusieurs images d'une quantité partielle parmi les troisièmes images individuelles (1A, 1B, 1C) et de l'au moins une quatrième image individuelle (2A, 3A), où la sélection pour la zone d'image de l'autre image panoramique correspond à la sélection pour la zone d'image de l'image panoramique de la quantité partielle parmi les premières images individuelles (1A, 1B, 1C) et l'au moins une deuxième image individuelle.

12. Dispositif selon l'une des revendications 1 à 9, comportant un deuxième système de caméra et conçu par ailleurs pour
enregistrer simultanément un troisième ensemble de troisièmes images individuelles (1A, 1B, 1C) qui couvrent ensemble le champ de vision panoramique (150), par plusieurs canaux optiques du deuxième système de caméra, où le deuxième système de caméra est disposé de manière décalée par rapport au premier système de caméra; et
compenser les effets de l'axe parallèle dans l'image panoramique à l'aide du troisième ensemble de troisièmes images.

13. Dispositif selon l'une des revendications 1 à 12, conçu par ailleurs pour
enregistrer au moins une autre image individuelle par un autre des plusieurs canaux optiques du premier système de caméra (110).

14. Procédé permettant de générer une image panoramique d'un champ de vision panoramique (150), présentant le fait de:
enregistrer simultanément un premier ensemble de premières images individuelles (1A, 1B, 1C) qui couvrent ensemble le champ de vision panoramique (150), par plusieurs canaux optiques d'un premier système de caméra (110);
enregistrer au moins une deuxième image individuelle (2A, 3A) par un des plusieurs canaux optiques du premier système de caméra (110), de sorte que l'au moins une deuxième image individuelle (2A, 3A) résulte, ensemble ou ensemble avec une première image individuelle enregistrée par l'un des plusieurs canaux optiques, en un deuxième ensemble d'images individuelles qui sont enregistrées de manière décalée l'une par rapport à l'autre et couvrent le champ de vision panoramique (150);
sélectionner, pour au moins une zone d'image de l'image panoramique, une ou plusieurs images d'une quantité partielle parmi les premières images individuelles (1A, 1B, 1C) et de l'au moins une deuxième image individuelle (2A, 3A) qui vient en chevauchement avec l'au moins une zone d'image; et
construire l'image panoramique à l'aide de l'une ou des plusieurs images dans l'au moins une zone d'image,
**caractérisé par le fait que** le procédé comporte par ailleurs les étapes suivantes consistant à:
déterminer une première différence entre une première paire de premières images individuelles qui concernent au moins un segment du champ de vision panoramique (150) et qui viennent en chevauchement l'une avec l'autre dans le champ de vision panoramique (150), dans une première zone de chevauchement dans la première zone de chevauchement,
déterminer une deuxième différence entre une deuxième paire d'images individuelles du deuxième ensemble d'images individuelles qui concernent le segment du champ de vision panoramique (150) et qui viennent en chevauchement l'une avec l'autre, dans le champ de vision panoramique (150), dans une deuxième zone de chevauchement, dans la deuxième zone de chevauchement,
sélectionner la première paire pour construire l'image panoramique dans le segment lorsque la première différence est inférieure à la deuxième différence, et
sélectionner la deuxième paire pour construire l'image panoramique dans le segment lorsque la première différence est supérieure à la deuxième différence.
